(19) **Europäisches Patentamt / European Patent Office / Office européen des brevets**

(11) **EP 4 671 422 A1**

(12) **EUROPEAN PATENT APPLICATION**
published in accordance with Art. 153(4) EPC

(43) Date of publication:
31.12.2025 Bulletin 2026/01

(21) Application number: 24760283.2

(22) Date of filing: 19.02.2024

(51) International Patent Classification (IPC):
$D04H\ 1/4209^{(2012.01)}$    $B01D\ 53/06^{(2006.01)}$
$B01D\ 53/26^{(2006.01)}$    $B01D\ 53/28^{(2006.01)}$
$D04H\ 1/26^{(2012.01)}$    $D04H\ 1/58^{(2012.01)}$
$D21H\ 11/18^{(2006.01)}$    $D21H\ 13/36^{(2006.01)}$

(52) Cooperative Patent Classification (CPC):
B01D 53/06; B01D 53/26; B01D 53/28; D04H 1/26;
D04H 1/4209; D04H 1/58; D21H 11/18; D21H 13/36

(86) International application number:
PCT/JP2024/005641

(87) International publication number:
WO 2024/176984 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.02.2023 JP 2023025513

(71) Applicant: Tomoegawa Corporation
Tokyo 104-8335 (JP)

(72) Inventor: HONJYOU, Takuya
Shizuoka-shi, Shizuoka 421-0192 (JP)

(74) Representative: Hoffmann Eitle
Patent- und Rechtsanwälte PartmbB
Arabellastraße 30
81925 München (DE)

(54) **INORGANIC FIBER SHEET**

(57) Provided is an inorganic fiber sheet having excellent performance. One embodiment of the present invention is an inorganic fiber sheet including: a first inorganic fiber; a second inorganic fiber; and an organic substance, wherein an average fiber diameter of the first inorganic fiber is larger than an average fiber diameter of the second inorganic fiber, the second inorganic fiber is an artificial crystalline fiber, and the organic substance is (a) a binder having a melting point of 150°C or less or a hot-water dissolution temperature of 100°C or less, and/or (b) a fibrillated organic fiber.

EP 4 671 422 A1

**Description**

TECHNICAL FIELD

The present invention relates to an inorganic fiber sheet.

BACKGROUND ART

In air conditioning equipment, a honeycomb filter is incorporated as a filter (adsorption-type rotor) that adsorbs moisture and volatile organic compounds. Such a honeycomb filter may be made of inorganic fibers in consideration of heat resistance and the like.
Patent Literature 1 discloses a honeycomb filter in which a Ce oxide adsorbent, silica, or the like is supported on a substrate made of a glass fiber or the like .

PRIOR ART DOCUMENT

Patent Document

Patent Document 1: Japanese patent application laid-open No.2020-032323

SUMMARY OF THE INVENTION

Problems to be Solved by the Invention

However, a conventional inorganic fiber sheet is not suitable as a substrate of a honeycomb filter due to insufficient supporting properties of the adsorbing component and shape processability.
Therefore, a first object of the present invention is to provide an inorganic fiber sheet having excellent performance. In addition, a second object is to provide an inorganic fiber sheet that can be preferably used as a substrate of a honeycomb filter or the like.

Means for Solving the Problems

As a result of intensive studies, the present inventors have found that the above objects can be achieved using a substrate with characteristic components. That is, the present invention is as follows.
A first embodiment of the present invention is an inorganic fiber sheet including:

a first inorganic fiber;
a second inorganic fiber; and
an organic substance, wherein
an average fiber diameter of the first inorganic fiber is larger than an average fiber diameter of the second inorganic fiber,
the second inorganic fiber is an artificial crystalline fiber, and
the organic substance is (a) a binder having a melting point of 150°C or less or a hot-water dissolution temperature of 100°C or less, and/or (b) a fibrillated organic fiber.

In the first inorganic fiber, a share of fibers having a fiber diameter of 3 to 15 $\mu$m is preferably 50% or more.
A ratio ($M_1/M_2$) of a content $M_1$ of the first inorganic fiber to a content $M_2$ of the second inorganic fiber in the inorganic fiber sheet is preferably 1.50 to 10.00.
The content $M_2$ of the second inorganic fiber in the inorganic fiber sheet is preferably 5 to 35% by mass.
A beating degree of the fibrillated organic fiber is preferably 200 CSF or less in terms of freeness.
The average area of pores of the inorganic fiber sheet is preferably 500 to 2000 $\mu$m$^2$.
The inorganic fiber sheet is preferably for a honeycomb filter of a moisture/volatile organic compound adsorption-type rotor.

Effects of the Invention

According to the present invention, an inorganic fiber sheet having excellent performance is provided. According to the present invention, an inorganic fiber sheet that can be preferably used as a substrate of a honeycomb filter or the like is further provided.

## EMBODIMENTS FOR CARRYING OUT THE INVENTION

Hereinafter, when the upper limit and the lower limit are described separately, a numerical range obtained by combining an arbitrary upper limit and an arbitrary lower limit is substantially disclosed.

Hereinafter, various measurements are performed at an ambient temperature set to room temperature (23°C) unless otherwise specified.

The structure/component, physical properties/properties, production method and application/use method of the inorganic fiber sheet according to the present disclosure will be described below.

### <<<Structure/Component of Inorganic Fiber Sheet>>>

The inorganic fiber sheet includes a predetermined second inorganic fiber, a first inorganic fiber different from the second inorganic fiber, and an organic substance.

The inorganic fiber sheet may contain another component as long as the effects of the present disclosure are not impaired.

Each component will be described below.

### <<Second Inorganic Fiber>>

The second inorganic fiber is preferably an artificial crystalline fiber.

Examples of the artificial crystalline fiber include a potassium titanate fiber, a silicon carbide fiber, a boron carbide fiber, a tobermorite fiber, a mullite fiber, a xonotlite fiber, and an aragonite fiber. The artificial crystalline fiber is preferably a potassium titanate fiber.

In the present disclosure, the second inorganic fiber also includes a form of a whisker.

The average fiber diameter $D_2$ of the second inorganic fiber is preferably less than 1.0 $\mu$m, 0.8 $\mu$m or less, or 0.6 $\mu$m or less. The lower limit of the average fiber diameter $D_2$ is not particularly limited, and is, for example, 0.1 $\mu$m, 0.2 $\mu$m, or 0.3 $\mu$m.

An aspect ratio $AR_2$ of the second inorganic fiber is preferably 10 or more, 15 or more, or 20 or more. The upper limit of the aspect ratio $AR_2$ is not particularly limited, and is, for example, 200, 100, or 50.

The average fiber diameter and aspect ratio of the inorganic fibers are calculated as an average value of 50 fibers obtained by observing the inorganic fibers in the inorganic fiber sheet with an optical microscope.

The content $M_2$ of the second inorganic fiber in the inorganic fiber sheet is not particularly limited, but is preferably 1% by mass or more, 5% by mass or more, or 10% by mass or more, and is preferably 50% by mass or less, 40% by mass or less, 35% by mass or less, or 30% by mass or less when the total amount of the inorganic fiber sheet is 100% by mass.

### <<First Inorganic Fiber>>

The first inorganic fiber is a fiber having an average fiber diameter larger than that of the second inorganic fiber.

More specifically, the average fiber diameter $D_1$ of the first inorganic fiber is preferably 1.0 $\mu$m or more, 1.5 $\mu$m or more, or 2.0 $\mu$m or more. The upper limit of the fiber diameter $D_1$ is not particularly limited, and is, for example, 50 $\mu$m, 30 $\mu$m, or 20 $\mu$m.

Here, in the first inorganic fiber, the share of fibers having a fiber diameter of 3 $\mu$m to 15 $\mu$m (the proportion of fibers having a fiber diameter of 3 $\mu$m to 15 $\mu$m in the entire first inorganic fiber) is preferably 50% or more, and preferably 50 to 80% or more. The use of such a fiber as the first inorganic fiber facilitates increasing the strength of the resulting inorganic fiber sheet.

The fiber share can be determined from the distribution of fiber diameters of 50 first inorganic fibers contained in the inorganic fibers obtained using an optical microscope.

A ratio ($D_1/D_2$) of the fiber diameter $D_1$ of the first inorganic fiber to the fiber diameter $D_2$ of the second inorganic fiber is preferably 1.5 or more, 2.0 or more, or 3.0 or more. The upper limit of $D_1/D_2$ is not particularly limited, and is, for example, 100, 60, or 40.

As described above, the use of the second inorganic fiber that is an artificial crystalline fiber, and the first inorganic fiber having a fiber diameter different from that of the second inorganic fiber to form a sheet into which a predetermined organic substance is further mixed allows for enhancement of the strength (post-firing strength), water absorption characteristics, and the like of the inorganic fiber sheet.

The fiber length and aspect ratio of the first inorganic fiber are not particularly limited as long as the first inorganic fiber has a length sufficient for forming the inorganic fiber sheet.

A ratio ($L_1/L_2$) of the fiber length $L_1$ of the first inorganic fiber to the fiber length $L_2$ of the second inorganic fiber is preferably 1.5 or more, 2.0 or more, or 5.0 or more. The upper limit of $L_1/L_2$ is not particularly limited, and is, for example, 100, 50, or 20.

The material of the first inorganic fiber is not particularly limited, and examples thereof include a glass fiber, a glass wool fiber, a rock wool fiber, a carbon fiber, an alumina fiber, a silica fiber, a titania fiber, a ceramic fiber (such as a fiber mainly composed of alumina and silica, e.g., a refractory ceramic fiber (RCF)), and a metal fiber (such as a stainless steel fiber or a copper fiber).

The first inorganic fiber is preferably a fiber other than an artificial crystalline fiber, and preferably a glass fiber or a ceramic fiber.

The content $M_1$ of the first inorganic fiber in the inorganic fiber sheet is not particularly limited, but is preferably 40% by mass or more, 45% by mass or more, or 50% by mass or more, and is preferably 85% by mass or less, 80% by mass or less, or 75% by mass or less when the total amount of the inorganic fiber sheet is 100% by mass.

The ratio ($M_1/M_2$) of the content $M_1$ of the first inorganic fiber to the content $M_2$ of the second inorganic fiber in the inorganic fiber sheet is preferably 1.00 or more, 1.20 or more, 1.50 or more, or 1.60 or more, and preferably 15.00 or less, 12.00 or less, or 10.00 or less.

<<Organic Substance>>

The organic substance is (a) a binder (hereinafter, sometimes referred to as the component (a)) having a melting point of 150°C or less or a hot-water dissolution temperature of 100°C or less, and/or (b) a fibrillated organic fiber (hereinafter, sometimes referred to as the component (b)). The organic substance may contain both the component (a) and the component (b).

The melting point of the component (a) is preferably 150°C or less, and more preferably 110 to 130°C. The use of such component (a) makes it easy to obtain a sheet having excellent strength, toughness, and processability because adhesion to a gear is suppressed during corrugation processing into a honeycomb shape or the like while the component (a) is sufficiently melted during paper-making and drying to facilitate development of a binder function.

The hot-water dissolution temperature of the component (a) is preferably 100°C or less, and more preferably 60°C to 80°C. The use of such component (a) makes it easy to obtain a sheet having excellent strength, toughness, and processability because the component (a) is uniformly dispersed in a process of producing an inorganic fiber sheet (e.g., a paper-making and drying step) and is sufficiently melted during paper-making and drying to facilitate development of a binder function.

The hot-water dissolution temperature refers to a temperature at which the resin starts to be dissolved in water when the resin is dispersed in water under normal pressure.

The component (a) may be fibrous or non-fibrous.

The material of the component (a) is not particularly limited, and examples thereof include polyvinyl alcohol, polyester such as PET (low melting point PET), and an ethylene vinyl alcohol copolymer.

The melting point of the organic substance is a value measured by differential scanning calorimetry (DSC).

The component (b) may be a natural fiber or a synthetic fiber.

Examples of the natural fiber include a wood fiber such as MP, CP, GP, RGP, CGP, SP, AP, KP, and SCP made of needle-leaved trees and broad-leaved trees, and a fiber such as cotton, straw, bamboo, esparto, bagasse, linter, Manila hemp, flax, hemp, jute, or ganpi.

Examples of the synthetic fiber include an olefin resin fiber such as a polyethylene fiber and a polypropylene fiber, polyacetal, polyimide, PBO, a fluorine-based resin such as PTFE, styrene and a copolymer thereof, and an acrylic acid ester and a copolymer thereof.

The component (b) is obtained by fibrillating the fiber. Note that the fibrillation of the fiber herein means that the fiber is subjected to fibrillation processing (processing of fuzzing the fiber).

The method for fibrillating the fiber is not particularly limited, but can be performed using a beating machine such as SDR, DDR, or beater.

The beating degree of the fiber in the component (b) is preferably 200 CSF or less, 150 CSF or less, 100 CSF or less, or 50 CSF or less in terms of freeness (in accordance with JIS P 8121, the Canadian standard freeness).

The use of such component (a) and/or component (b) facilitates the proper retention of two or more fibers having different fiber diameters (the first inorganic fiber and the second inorganic fiber), an inorganic binder described later, and the like, thus increasing the strength and the like of the sheet.

The total content $M_O$ of the component (a) and the component (b) in the inorganic fiber sheet is not particularly limited, but is preferably 1% by mass or more, 5% by mass or more, or 10% by mass or more, and is preferably 30% by mass or less, 25% by mass or less, or 20% by mass or less when the total amount of the inorganic fiber sheet is 100% by mass.

A ratio ($M_2/M_O$) of the content $M_2$ of the second inorganic fiber to the total content $M_O$ of the component (a) and the component (b) in the inorganic fiber sheet is preferably 0.1 or more, 0.2 or more, or 0.3 or more, and preferably 5.0 or less, 3.0 or less, or 2.5 or less.

<<Another Component>>

Examples of another component include a conventionally known additive that can be blended in the inorganic fiber sheet. Specific examples of the other component include a surfactant, a dispersant, a thickener, an antifoaming agent, a paper strengthening agent, and an inorganic binder described later.

The content $M_F$ of another component in the inorganic fiber sheet is not particularly limited, but is preferably 10% by mass or less, 5% by mass or less, 3% by mass or less, 1% by mass or less, or the like when the total amount of the inorganic fiber sheet is 100% by mass.

<<<Physical Properties/Properties>>>

<<Average Area of Pore>>

In the inorganic fiber sheet, the average area of pores is preferably 200 $\mu m^2$ or more, and more preferably 500 $\mu m^2$ or more. The upper limit is not particularly limited, and is, for example, 5,000 $\mu m^2$ or 2,000 $\mu m^2$.

The average area of pores of the inorganic fiber sheet is measured by the following method.

A sample is measured with a microscope (VHX-6000 manufactured by KEYENCE CORPORATION) at a magnification of 20 times. Thereafter, as a measurement range, an area of a pore portion in the range of 15,000 $\mu m$ in width $\times$ 10,000 $\mu m$ in length is binarized to calculate an average area.

<<<Production Method>>>

An example of a method for producing an inorganic fiber sheet will be described below.

The inorganic fiber sheet is obtained by performing a paper-making step, a pressing step (optional step), and a drying step. Each step will be described below.

<<Paper-making Step>>

In the paper-making step, each fiber-containing raw material is subjected to paper-making to form a moisture-containing fiber sheet (wet sheet).

The paper machine to be used in the paper-making step can be any paper machine applied to a general paper-making technique, and examples thereof include, but are not particularly limited to, a Fourdrinier paper machine, a tanmo paper machine, a cylinder paper machine, an inclined paper machine, a twin-wire paper machine, and a combination paper machine that combines the same or different paper machines among them.

The water retention rate (moisture content of the wet sheet) of the wet sheet to be obtained in the paper-making step is not particularly limited, and is preferably 65 to 75% by mass base on the total amount of the wet sheet. When the water retention rate of the wet sheet is in such a range, the hot water soluble resin is sufficiently dissolved in the drying step to be described later, the strength is easily increased, and the wet sheet can be prevented from being peeled off from the wire due to excessive moisture.

<<Pressing Step (Optional Step)>>

The pressing step is a step of applying pressure to the wet sheet obtained in the paper-making step to mechanically dehydrate the wet sheet and adjust the thickness of the sheet to obtain a compressed sheet.

In the pressing step, it is possible to control the compressibility of the wet sheet by adjusting the pressure during compression, and the compressibility tends to be higher as the pressure is higher.

The pressure during compression is not particularly limited, and is preferably 0.4 MPa or less.

The compressibility of the wet sheet in the pressing step is determined from the following equation (1).

Compressibility (%) = {(thickness of wet sheet before compression - thickness of wet sheet after compression)/thickness of wet sheet before compression} $\times 100$ [Equation (1)]

Note that the "thickness of wet sheet after compression" refers to the thickness of the compressed sheet.

The water retention of the compressed sheet (moisture content of the compressed sheet) is preferably 55 to 70% by mass, and more preferably 60 to 65% by mass based on the total amount of the compressed sheet.

<<Drying Step>>

The drying step is a step of drying moisture contained in the compressed sheet to obtain an inorganic fiber sheet.

The drying device to be used in the drying step can be any device applied to drying of a general inorganic fiber sheet, and examples thereof include, but are not particularly limited to, a Yankee dryer, a rotary dryer, a hand dryer, an air dryer, a cylinder dryer, a suction drum dryer, and an infrared type dryer.

The drying temperature is preferably 70°C to 180°C, and more preferably 100°C to 140°C. When the drying temperature is within the above range, the organic substance (e.g., a hot water soluble resin) easily exhibits performance as a binder, discoloration due to overheating, adhesion to a canvas due to dry-heat fusion, and transfer failure are easily prevented.

The drying time may last until the water capacity in the compressed sheet falls within a predetermined range (e.g., less than 1% by mass of the total amount of the sheet).

<<<Application/Method of Use>>>

The inorganic fiber sheet according to the present disclosure can increase the porosity of the sheet while appropriately interlacing a plurality of inorganic fibers, has excellent processability (corrugation processability), safety, and the like, and easily exhibits sufficient adsorbability, and thus can be preferably used as a substrate for forming a honeycomb filter.

In addition, the inorganic fiber sheet according to the present disclosure can be preferably used in applications of a conventionally known inorganic fiber sheet (e.g., a reinforcing material of a fiber-reinforced resin and a gasket) in addition to the substrate that forms the honeycomb filter.

The honeycomb filter obtained using the inorganic fiber sheet according to the present disclosure will be described in detail below.

<<Honeycomb Filter>>

The honeycomb filter is obtained by performing corrugation processing or the like on the inorganic fiber sheet to form a honeycomb formed body, followed by firing. In other words, the honeycomb filter of the present disclosure is a fired body of the inorganic fiber sheet.

Such a honeycomb filter is installed in an air conditioning facility and used, for example, as a rotor for adsorbing moisture and a volatile organic compound.

Note that in the honeycomb filter according to the present disclosure, an adsorbing component may be internally or externally added. Such an adsorbing component is usually not particularly limited as long as it can adsorb moisture or a volatile organic compound, and examples thereof include alumina, sepiolite, zeolite, a layered clay mineral (bentonite, talc, kaolin, mica, hydrotalcite, etc.), and activated carbon.

The honeycomb filter may contain an inorganic binder such as colloidal silica or water glass.

As a preferred example of the method for producing a honeycomb filter, a method for producing a honeycomb filter using silica sol as a raw material of an inorganic binder will be described below.

<<Preferred Example of Method for Producing Honeycomb Filter Containing Colloidal Silica>>

<Inorganic Fiber Sheet Preparation Step>

According to the method described above, an inorganic fiber sheet (an inorganic fiber sheet containing an inorganic fiber and an organic substance) is prepared.

When the inorganic fiber sheet is wound in a roll shape, the inorganic fiber sheet is sent to a corrugation processing step while being unwound. In addition, preheating of warming the inorganic fiber sheet may be performed before the inorganic fiber sheet is sent to the corrugation processing step.

<Corrugation Processing Step>

The inorganic fiber sheet is passed through a gap between meshes of the heated rack gear and pinion gear to perform corrugation processing.

The pitch of the gear can be appropriately adjusted according to the shape of the honeycomb filter, and is, for example, 1 mm to 5 mm.

The temperature of the gear may be appropriately adjusted according to the type of organic substance contained in the inorganic fiber sheet, and is preferably 200°C or less, more preferably 80°C to 120°C, and the like.

<Silica Sol Impregnation Step>

The inorganic fiber sheet subjected to corrugation processing is impregnated with silica sol. The silica sol is a colloidal solution in which nano-sized colloidal silica is dispersed in an organic solvent.

The concentration of the silica sol and the impregnation time of the inorganic fiber sheet into the silica sol can be appropriately adjusted according to the amount of colloidal silica to be attached.

Since the inorganic fiber sheet according to the present disclosure has excellent water absorbency, impregnation into a silica sol or the like is appropriately performed, and a fired body (filter) having excellent strength can be obtained.

< Heating Step>

The inorganic fiber sheet is heated to remove the organic solvent from the silica sol and fire an inorganic wire sheet. The heating temperature is not particularly limited, and is, for example, 200 to 600°C. In addition, the heating time is not particularly limited, and is, for example, 10 minutes to 3 hours. The firing may be performed in any of an air atmosphere, an inert gas atmosphere, and an active gas atmosphere.

The honeycomb filter thus obtained is reinforced by the film of colloidal silica present across the fibers while maintaining pores derived from the inorganic fiber sheet, and thus has excellent performance as an adsorption rotor.

The technology according to the present disclosure may be an air conditioning facility including a honeycomb filter as an adsorption rotor, or may be a replacement honeycomb filter in the air conditioning facility.

Examples

The present invention will be described in more detail below with reference to Examples, but the present invention is not limited thereto at all.

<<<Preparation of Inorganic Fiber Sheet>>>

<<Example 1>>

<Preparation of Raw Material Composition for Paper Making>

The first fiber, the second fiber, and the organic substance were mixed so as to have the blending ratio shown in the table to prepare a raw material composition.

<Paper Making>

A paper-making sheet was obtained from the raw material composition using an inclined paper machine. The obtained paper-making sheet had a thickness of 180 μm and a water retention of 65% by mass.

<Drying>

The sheet was dried using a Yankee dryer to obtain an inorganic fiber sheet according to Example 1. The drying temperature is 140°C and the drying time is 2 minutes.

<<Examples 2 to 16 and Comparative Examples 1 to 5>>

Inorganic fiber sheets according to Example 2 to 16 and Comparative Example 1 to 5 were each obtained in the same manner as in Example 1, except that the raw materials to be used were changed.

<<<Evaluation>>>

<<Average Area of Pore>>

The average area of pores of each inorganic fiber sheet was measured. The measurement results are shown in each table.

<<Post-firing Strength>>

The strength after firing was evaluated based on the following evaluation method and evaluation criteria. The evaluation results are shown in each table.

<Evaluation Method>

Each inorganic fiber sheet is impregnated with an inorganic adhesive mainly composed of a silica sol, fired at 450°C for 2 hours in an air atmosphere, and then measured using a tensile tester in accordance with JIS P 8113.

<Evaluation Criteria>

⊙: 6 N/15 mm or more
O: 3 N/15 mm or more and less than 6 N/15 mm
×: less than 3 N/15 mm

<<Amount of Water Absorption>>

The amount of water absorption was evaluated based on the following evaluation method and evaluation criteria. The evaluation results are shown in each table.

<Evaluation Method>

In accordance with JIS L 1913, a 5×5 cm test piece is collected to measure the mass in units of 1 mg. Water is put into an appropriate container, the test piece is immersed for 1 minute or more, the test piece is taken out of water with tweezers, and after water is dropped for 1 minute or more, the mass thereof is measured up to 1 mg.
Thereafter, the amount of water absorption per unit volume is calculated.

<Evaluation Criteria>

⊙: 11.0 g/cm$^3$ or more
O: 10.0 g/cm$^3$ or more and less than 11.0 g/cm$^3$
△: 9.0 g/cm$^3$ or more and less than 10.0 g/cm$^3$
×: less than 9.0 g/cm$^3$

<<Water Absorption Rate>>

The water absorption rate was evaluated in accordance with the Klemm method based on the following evaluation method and evaluation criteria. The evaluation results are shown in each table.

<Evaluation Method>

A test piece having a width of 15 mm and a length of 200 mm or more is prepared, and the lower end (15 mm) of the vertically suspended test piece is immersed in water.
The rise of water due to the capillary phenomenon is observed, and the time when the water rises to a position of 30 mm from the water surface is measured.

<Evaluation Criteria>

⊙: less than 20 seconds
O: 20 seconds or more and less than 40 seconds
△: 40 seconds or more and less than 80 seconds

×: 80 seconds or more

[Table 1]

| | | | | Example 1 | Example 2 | Example 3 | Example 4 | Example 5 | Example 6 | Example 7 | Example 8 |
|---|---|---|---|---|---|---|---|---|---|---|---|
| Composition | First inorganic fiber | Glass fiber | Average fiber diameter:12 $\mu$ m<br>Share of fiber having fiber diameter of 3 to 15 $\mu$ m: 50% or more | 65 | 65 | 79 | 76 | 82 | 75 | 65 | 55 |
| | | RCF | Average fiber diameter:2 $\mu$ m<br>Share of fiber having fiber diameter of 3 to 15 $\mu$ m: less than 50% | | | | | | | | |
| | Second inorganic fiber | Artificial crystalline fiber | Potassium titanate fiber<br>Average fiber diameter: 0.4 $\mu$ m, aspect ratio: 22 | 20 | 20 | 6 | 9 | 3 | 10 | 20 | 30 |
| | | Artificial crystalline fiber | Silicon carbide fiber<br>Average fiber diameter: 0.6 $\mu$ m, aspect ratio: 26 | | | | | | | | |
| | | Artificial amorphous fiber | Milled glass fiber<br>Average fiber diameter: 12 $\mu$ m, aspect ratio: 37 | | | | | | | | |
| | | Natural crystalline fiber | $\beta$ -sepiolite<br>Average fiber diameter: 0.2 $\mu$ m, aspect ratio: 11 | | | | | | | | |
| | Organic substance | Organic fiber | Cellulose fiber<br>Beating degree:50CSF | 10 | 10 | 15 | 15 | 15 | 10 | 10 | 10 |
| | | | Cellulose fiber<br>Beating degree:250CSF | | | | | | | | |
| | | | Cellulose fiber<br>Unbeaten | | | | | | | | |
| | | Binder | PVA fiber<br>Melting point: 200℃, water dissolution temperature: 90℃ | 5 | 5 | | | | 5 | 5 | 5 |
| | | | PET fiber<br>Melting point: 150℃ or less, water dissolution temperature: higher than 100℃ | | | | | | | | |
| | | | PET fiber<br>Melting point: higher than 150℃, water dissolution temperature: higher than 100℃ | | | | | | | | |
| | Blending ratio of first inorganic fiber/second inorganic fiber | | | 3.25 | 3.25 | 13.17 | 8.44 | 27.33 | 7.50 | 3.25 | 1.83 |
| Struc-ture | Pore | Average area of pore ( $\mu$ m²) | | 400 | 600 | 1823 | 1768 | 2333 | 1599 | 1007 | 769 |
| Evaluation | Strength | Post-firing strength | | 5.2 | 7.6 | 3.7 | 5.2 | 3.0 | 5.5 | 7.1 | 7.9 |
| | | | | O | ◎ | O | O | O | O | ◎ | ◎ |
| | Water absorbency | Amount of water absorption (g/cm³) | | 9.8 | 10.1 | 10.9 | 10.7 | 11.0 | 10.8 | 11.1 | 10.3 |
| | | | | △ | O | O | O | ◎ | O | ◎ | O |
| | | Water absorption rate (sec) | | 15 | 13 | 34 | 28 | 41 | 25 | 15 | 18 |
| | | | | ◎ | ◎ | O | O | △ | O | ◎ | ◎ |
| | Overall | | | △ | ◎ | O | O | △ | O | ◎ | ◎ |

[Table 2]

| Composition | | | Example 9 | Example 10 | Example 11 | Example 12 | Example 13 | Example 14 | Example 15 | Example 16 |
|---|---|---|---|---|---|---|---|---|---|---|
| First inorganic fiber | Glass fiber | Average fiber diameter:12μm / Share of fiber having fiber diameter of 3 to 15μm: 50% or more | 65 | 45 | 65 | 65 | 65 | 65 | 65 | 50 |
| | RCF | Average fiber diameter:2μm / Share of fiber having fiber diameter of 3 to 15μm: less than 50% | | | | | | | | |
| Second inorganic fiber | Artificial crystalline fiber | Potassium titanate fiber / Average fiber diameter: 0.4μm, aspect ratio: 22 | 20 | 40 | | 20 | 20 | 20 | 20 | 35 |
| | Artificial crystalline fiber | Silicon carbide fiber / Average fiber diameter: 0.6μm, aspect ratio: 26 | | | 20 | | | | | |
| | Artificial amorphous fiber | Milled glass fiber / Average fiber diameter: 12μm, aspect ratio: 37 | | | | | | | | |
| | Natural crystalline fiber | β–sepiolite / Average fiber diameter: 0.2μm, aspect ratio: 11 | | | | 15 | | | | |
| Organic substance | Organic fiber | Cellulose fiber Beating degree:50CSF | 10 | 10 | 10 | | | | | |
| | Organic fiber | Cellulose fiber Beating degree:250CSF | | | | | 15 | | | |
| | Organic fiber | Cellulose fiber Unbeaten | | | | | | | | |
| | Binder | PVA fiber / Melting point: 200°C, water dissolution temperature: 90°C | 5 | 5 | 5 | | | 15 | | 15 |
| | Binder | PET fiber / Melting point: 150°C or less, water dissolution temperature: higher than 100°C | | | | | | | 15 | |
| | Binder | PET fiber / Melting point: higher than 150°C, water dissolution temperature: higher than 100°C | | | | | | | | |
| Structure | Blending ratio of first inorganic fiber/second inorganic fiber | | 3.25 | 1.13 | 3.25 | 3.25 | 3.25 | 3.25 | 3.25 | 1.43 |
| Evaluation | Pore | Average area of pore (μm²) | 851 | 841 | 1231 | 2079 | 2308 | 1798 | 1983 | 843 |
| | Strength | Post-firing strength | 5.9 | 4.7 | 5.2 | 5.7 | 4.1 | 6.9 | 5.2 | 5.3 |
| | | | ○ | ○ | ○ | ○ | ○ | ◎ | ○ | ○ |
| | Water absorbency | Amount of water absorption (g/cm³) | 10.4 | 10.1 | 11.5 | 13.8 | 9.2 | 11.1 | 10.9 | 10.2 |
| | | | ○ | ○ | ◎ | ◎ | △ | ◎ | ○ | ○ |
| | | Water absorption rate (sec) | 18 | 76 | 18 | 31 | 37 | 25 | 22 | 32 |
| | | | ◎ | △ | ◎ | ○ | ○ | ○ | ○ | ○ |
| | Overall | | ○ | △ | ◎ | ○ | △ | ◎ | ○ | ○ |

[Table 3]

| Composition / Evaluation | | | Comparative Example 1 | Comparative Example 2 | Comparative Example 3 | Comparative Example 4 | Comparative Example 5 |
|---|---|---|---|---|---|---|---|
| First inorganic fiber | Glass fiber | Average fiber diameter:12 μm; Share of fiber having fiber diameter of 3 to 15 μm: 50% or more | 65 | 65 | 65 | 80 | 65 |
| First inorganic fiber | RCF | Average fiber diameter:2 μm; Share of fiber having fiber diameter of 3 to 15 μm: less than 50% | | | | | |
| Second inorganic fiber | Artificial crystalline fiber | Potassium titanate fiber; Average fiber diameter: 0.4 μm, aspect ratio: 22 | | | 20 | 20 | 20 |
| Second inorganic fiber | Artificial crystalline fiber | Silicon carbide fiber; Average fiber diameter: 0.6 μm, aspect ratio: 26 | | | | | |
| Second inorganic fiber | Artificial amorphous fiber | Milled glass fiber; Average fiber diameter: 12 μm, aspect ratio: 37 | 20 | | | | |
| Second inorganic fiber | Natural crystalline fiber | β~sepiolite; Average fiber diameter: 0.2 μm, aspect ratio: 11 | | 20 | | | |
| Organic substance | Organic fiber | Cellulose fiber Beating degree:50CSF | 10 | 10 | | | 10 |
| Organic substance | Organic fiber | Cellulose fiber Beating degree:250CSF | | | 15 | | |
| Organic substance | Organic fiber | Cellulose fiber Unbeaten | | | | | |
| Organic substance | Binder | PVA fiber (Melting point: 200°C, water dissolution temperature: 90°C) | | | | | |
| Organic substance | Binder | PET fiber (Melting point: 150°C or less, water dissolution temperature: higher than 100°C) | 5 | 5 | 5 | | 5 |
| Organic substance | Binder | PET fiber (Melting point: higher than 150°C, water dissolution temperature: higher than 100°C) | | | | | |
| Structure | | Blending ratio of first inorganic fiber/second inorganic fiber | 3.25 | 3.25 | 3.25 | 4 | 3.25 |
| Evaluation | Pore | Average area of pore ($\mu m^2$) | 2295 | 2970 | 2682 | Unable to form sheet | 2037 |
| Evaluation | Strength | Post-firing strength | 1.8  × | 2.4  × | 2.9  × | | 2.8  × |
| Evaluation | Water absorbency | Amount of water absorption (g/cm³) | 10.3  ○ | 10.3  ○ | 12.0  ◎ | | 10.7  ○ |
| Evaluation | Water absorbency | Water absorption rate (sec) | 24  ○ | 24  ○ | 46  △ | | 23  ○ |
| Evaluation | | Overall | × | × | × | × | × |

## Claims

1. An inorganic fiber sheet comprising:

12

a first inorganic fiber;

a second inorganic fiber; and

an organic substance, wherein

an average fiber diameter of the first inorganic fiber is larger than an average fiber diameter of the second inorganic fiber,

the second inorganic fiber is an artificial crystalline fiber, and

the organic substance is (a) a binder having a melting point of 150°C or less or a hot-water dissolution temperature of 100°C or less, and/or (b) a fibrillated organic fiber.

2. The inorganic fiber sheet according to claim 1, wherein in the first inorganic fiber, a share of fibers having a fiber diameter of 3 to 15 $\mu$m is 50% or more.

3. The inorganic fiber sheet according to claim 1 or 2, wherein a ratio ($M_1/M_2$ of a content $M_1$ of the first inorganic fiber to a content $M_2$ of the second inorganic fiber in the inorganic fiber sheet is 1.50 to 10.00.

4. The inorganic fiber sheet according to claim 1 or 2, wherein a content $M_2$ of the second inorganic fiber in the inorganic fiber sheet is 5 to 35% by mass.

5. The inorganic fiber sheet according to claim 1 or 2, wherein a beating degree of the fibrillated organic fiber is 200 CSF or less in terms of freeness.

6. The inorganic fiber sheet according to claim 1 or 2, wherein an average area of pores of the inorganic fiber sheet is 500 to 2000 $\mu$m$^2$.

7. The inorganic fiber sheet according to claim 1 or 2, which is for a honeycomb filter of a moisture/volatile organic compound adsorption-type rotor.

## INTERNATIONAL SEARCH REPORT

| International application No. |
| --- |
| **PCT/JP2024/005641** |

| A. | CLASSIFICATION OF SUBJECT MATTER |
| --- | --- |

*D04H 1/4209*(2012.01)i; *B01D 53/06*(2006.01)i; *B01D 53/26*(2006.01)i; *B01D 53/28*(2006.01)i; *D04H 1/26*(2012.01)i; *D04H 1/58*(2012.01)i; *D21H 11/18*(2006.01)i; *D21H 13/36*(2006.01)i
FI: D04H1/4209; B01D53/06 100; B01D53/26 220; B01D53/28; D04H1/26; D04H1/58; D21H11/18; D21H13/36 Z

According to International Patent Classification (IPC) or to both national classification and IPC

| B. | FIELDS SEARCHED |
| --- | --- |

Minimum documentation searched (classification system followed by classification symbols)

D04H1/4209; B01D53/06; B01D53/26; B01D53/28; D04H1/26; D04H1/58; D21H11/18; D21H13/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022/009845 A1 (TOMOEGAWA PAPER CO., LTD.) 13 January 2022 (2022-01-13) <br> table 2, example 6 | 1-4 |
| X | JP 2004-267914 A (NIPPON MUKI CO., LTD.) 30 September 2004 (2004-09-30) <br> claim 1, table 1, examples 2, 3 | 1-4, 6, 7 |
| X | JP 60-226450 A (NITTO BOSEKI CO., LTD.) 11 November 1985 (1985-11-11) <br> claims, examples 2, 4 | 1, 3 |
| A | JP 7-252794 A (SAKAI CHEM IND CO., LTD.) 03 October 1995 (1995-10-03) <br> paragraph [0011] | 5 |
| P, X | WO 2023/157781 A1 (IMAE IND CO., LTD.) 24 August 2023 (2023-08-24) <br> paragraph [0136], table 2 (B3) | 1-4 |
| P, A | paragraph [0136], table 2 (B3) | 5-7 |

☐ Further documents are listed in the continuation of Box C.   ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **08 April 2024** | **23 April 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/005641**

| Patent document cited in search report | | | Publication date (day/month/year) | Patent family member(s) | | | Publication date (day/month/year) |
|---|---|---|---|---|---|---|---|
| WO | 2022/009845 | A1 | 13 January 2022 | CN | 115768944 | A | |
| | | | | KR | 10-2023-0034963 | A | |
| JP | 2004-267914 | A | 30 September 2004 | (Family: none) | | | |
| JP | 60-226450 | A | 11 November 1985 | (Family: none) | | | |
| JP | 7-252794 | A | 03 October 1995 | (Family: none) | | | |
| WO | 2023/157781 | A1 | 24 August 2023 | (Family: none) | | | |

Form PCT/ISA/210 (patent family annex) (July 2022)

**EP 4 671 422 A1**

## REFERENCES CITED IN THE DESCRIPTION

**Patent documents cited in the description**

- JP 2020032323 A